(19) **Europäisches Patentamt**
**European Patent Office**
**Office européen des brevets**

(11) **EP 4 105 309 A1**

(12) ## EUROPÄISCHE PATENTANMELDUNG

(43) Veröffentlichungstag:
**21.12.2022 Patentblatt 2022/51**

(21) Anmeldenummer: **21179602.4**

(22) Anmeldetag: **15.06.2021**

(51) Internationale Patentklassifikation (IPC):
**C12C 1/027** (2006.01)    **C12C 3/00** (2006.01)
**G01P 5/24** (2006.01)

(52) Gemeinsame Patentklassifikation (CPC):
**C12C 1/027; C12C 9/00; G01P 5/245**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Goldammer, Matthias**
**80687 München (DE)**
• **Strzoda, Rainer**
**81825 München (DE)**
• **Gigler, Alexander Michael**
**86836 Untermeitingen (DE)**

(54) **BESTIMMUNG DER QUALITÄT BEIM MÄLZPROZESS**

(57)     Die Erfindung gibt ein automatisiertes Verfahren zur Bestimmung der Mürbigkeit von Getreidekörnern (8) bei der Keimung im Mälzprozess, wobei die Schallgeschwindigkeit (c) im gekeimten Getreidekorn (8) ermittelt wird, wobei die Schallgeschwindigkeit (c) ein Maß für die Mürbigkeit ist.

Eine zugehörige Messvorrichtung mit einem Schallgeber (1) und einem Schallempfänger (2) sowie eine Verwendung der Messvorrichtung beim Mälzen werden ebenfalls angegeben.

FIG 1

EP 4 105 309 A1

**Beschreibung**

GEBIET DER ERFINDUNG

Die Erfindung betrifft ein automatisiertes Verfahren zur Bestimmung der Mürbigkeit von Getreidekörnern bei der Keimung im Mälzprozess. Die Erfindung betrifft außerdem eine zugehörige Messvorrichtung und eine Verwendung der Messvorrichtung in einem Keimbett.

HINTERGRUND DER ERFINDUNG

Bei der Herstellung von Bier (Bierbrauen) wird aus Getreide (meist Braugerste) Braumalz hergestellt. Das Mälzen dient unter anderem der Gewinnung von Enzymen. Der eigentliche Brauprozess beginnt mit dem Maischen - einem Fermentationsprozess. Dabei wird das geschrotete Braumalz mit Wasser vermischt. Die so entstandene Maische wird unter ständigem Rühren erhitzt. Das Maischen dient dazu, wasserunlösliche Stoffe des Malzes, insbesondere Stärke, durch die Wirkung der Malzenzyme in wasserlösliche Stoffe umzuwandeln, insbesondere Maltose.

Daraufhin wird die Maische im Läuterbottich geläutert: Der Malztreber wird aus der Würze (so nennt man den flüssigen, vergärbaren Teil der Maische) entfernt. Durch Nachgüsse mit heißem Wasser wird noch im Treber enthaltene Würze daraus herausgespült und mit der vorher gewonnenen Würze vereinigt. Das Ganze wird als sog. Vorderwürze anschließend in der Kochpfanne mit Hopfen gekocht. Dieser Sud wird aus der Pfanne in einen Whirlpool oder durch einen Filter gepumpt, um das geronnene Eiweiß und andere Schwebstoffe von der Ausschlagwürze zu trennen. Diesen Vorgang nennt man Ausschlagen.

Zuletzt wird die Flüssigkeit, Anstellwürze genannt, in einem Kühler auf die optimale Gärtemperatur abgekühlt und je nach Biersorte wird eine Kultur der passenden Hefe zugesetzt. Obergärige Hefesorten vergären bei Temperaturen zwischen 18 °C und 24 °C, untergärige bei 8 °C bis 14 °C. Bei der alkoholischen Gärung werden die in der Würze gelösten Zucker zu Ethanol und Kohlenstoffdioxid. Kohlenstoffdioxid entweicht zum Teil als Gas, teils bleibt es im fertigen Bier unter Druck als Kohlensäure gebunden. Nach der Hauptgärung, die etwa eine Woche dauert, muss das Jungbier noch etwa vier bis sechs Wochen nachgären und lagern.

Das Malz wird hauptsächlich wie bereits erwähnt aus Gerste und zu einem in geringem Umfang aus Weizen gewonnen. Im Mälzprozess wird das Korn unter definierten Bedingungen zur Keimung gebracht, was in der Regel knapp eine Woche dauert. Wenn das Grünmalz die erforderlichen Eigenschaften erreicht hat, wird der Keimprozess beendet. Dem Grünmalz wird in einem Trocknungsprozess (dem sogenannten Därren) die Feuchtigkeit entzogen. Das entstandene Malz ist somit lagerfähig und kann zu gegebener Zeit dem eigentlichen Brauprozess zugeführt werden.

Schon seit Längerem gibt es Ansätze, den Mälzprozess zu optimieren, d.h. in der Regel den Keimprozess zu verkürzen, um einerseits den Energieverbrauch z.B. für das Kühlen des Keimgutes zu reduzieren und andererseits den Durchsatz der Mälzerei bei gleicher Anlagengröße zu erhöhen. Daneben besteht ebenfalls die Anforderung nach gleichmäßiger Qualität des produzierten Malzes.

In der Regel liegt die Beurteilung des Reifegrades von Grünmalz in den Händen des Mälzers, der sie anhand von äußerlichen Eigenschaften vornimmt (Narziß, "Die Bierbrauerei", Band 1, 2021; ISBN 978-3-527-32532-0). Dazu gehören der Geruch, das Aussehen des Wurzelkeims und des Blattkeims, sowie die sogenannte "Auflösung"; d.h. der Mälzer zerreibt einige Körner und beurteilt die Mürbigkeit des Grünmalzes. Die Mürbigkeit des Getreidekorns ist somit ein wichtiger Qualitätsparameter für das Malz, denn sie gibt Auskunft darüber, inwieweit die Stärke im Endosperm des Kornes freiliegt. Erst wenn die Stärke freiliegt, können die Enzyme ($\alpha$-Amylasen) in der Maische Stärke in Glucose umwandeln, die mit Hefe zu Alkohol (Ethanol) vergären. Eine unzureichende Freisetzung der Stärke führt zu einem schlechteren Brauergebnis.

Neben der sensorischen Beurteilung gibt es chemisch und physikalisch Verfahren zur Beurteilung der Malzqualität (T. Dickel, "Untersuchung zu enzymatischen Abbauprodukten beim Maischen im Hinblick auf die Entwicklung eines Prozessführungssystems", Dissertation an der Technischen Universität München, 2003), z.B. des $\beta$-Glucan Gehalts oder der $\alpha$-Amylase Aktivität, der Messung der Viskosität der Maische oder der Mürbigkeit des Malzes mittels einer definierten Mahlung. Die Verfahren benötigen in der Regel eine Probenaufbereitung und sind zeit- und personalintensiv. Diese Analysen eignen sich eher zu einer Qualitätsbeurteilung der fertigen Braumalzes als zu einer Echtzeit-Prozessüberwachung.

ZUSAMMENFASSUNG DER ERFINDUNG

Es ist Aufgabe der Erfindung, eine Lösung anzugeben, mit der eine Prozesskontrolle beim Mälzen gegenüber dem Stand der Technik verbessert wird.

Dazu wird ein automatisiertes Prozess-Monitoring vorgeschlagen, das insbesondere in der Lage ist, den Grad der Reife von Grünmalz (= vorgekeimtes Getreide) mit kurzer Messzeit ohne aufwändige Präparation der Malzkörner zu bestimmen. Daneben ist es wichtig, das Grünmalz nicht nur an einem Punkt in einem Keimbett zu untersuchen, sondern automatisiert verteilt über das ganze Keimbett. Damit lassen sich Inhomogenitäten in der Mälzanlage aufspüren und Gegenmaßnahmen zur Erhöhung der Homogenität generell sowie auch während eines laufenden Mälzvorgangs ergreifen.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein Aspekt der Erfindung besteht darin, eine Ultraschall-Messung mit einem portablen Aufbau (beispielsweise mit einem Handgerät) direkt im Keimbett von einem Operator (= Mälzer) durchführen zu lassen und das Messergebnis ad hoc zur Verfügung zu stellen. Dabei ist man bezüglich der Messgröße nicht auf die Expertise eines Mälzers angewiesen. Die Messung ist objektiv und vergleichbar.

Im Gegensatz zu einem Mälzer, der lokal eine Probe entnehmen kann, ist die Messvorrichtung in der Lage, nahezu kontinuierlich Messwerte aus verschiedenen Bereichen des Keimbettes zu gewinnen und die Homogenität des Prozesses von Anfang bis Ende lückenlos zu überwachen. Es werden auch keine aufwändigen Präparationsschritte wie bei Analyseverfahren des Stands der Technik benötigt.

Die Erfindung beansprucht ein automatisiertes Verfahren zur Bestimmung der Mürbigkeit von Getreidekörnern bei der Keimung im Mälzprozess, wobei die Schallgeschwindigkeit im gekeimten Getreidekorn ermittelt wird, wobei die Schallgeschwindigkeit ein Maß für die Mürbigkeit ist.

In einer Weiterbildung des Verfahrens wird die ermittelte Schallgeschwindigkeit mit Referenzwerten verglichen, wobei diese an gekeimten Getreidekörnern vordefinierter Mürbigkeit vorab bestimmt werden.

In einer weiteren Ausgestaltung wird mindestens ein Getreidekorn zur Ermittlung der Schallgeschwindigkeit zwischen einem Schallgeber und einem Schallempfänger in eine Messvorrichtung, vorzugsweise unter einem vordefinierten Druck, geklemmt.

In einer weiteren Ausprägung des Verfahrens wird die Schallgeschwindigkeit durch eine Laufzeitmessung oder eine Phasenverschiebung ermittelt.

In einer weiteren Ausprägung des Verfahrens wird die Schallgeschwindigkeit durch Messung einer Resonanzfrequenz ermittelt wird.

In einer weiteren Ausbildung des Verfahrens wird die Dämpfung von Schallwellen in dem vorgekeimten Getreidekorn ermittelt, wobei die Dämpfung ein weiteres Maß für die Mürbigkeit ist.

Bevorzugt ist die Frequenz der Schallwellen im Ultraschallbereich (20 kHz bis 10 GHz) angesiedelt.

Die Erfindung beansprucht auch eine Messvorrichtung zur Bestimmung der Mürbigkeit von Getreidekörnern bei der Keimung im Mälzprozess, wobei die Messvorrichtung ausgebildet ist, die Schallgeschwindigkeit im gekeimten Getreidekorn zu ermitteln, wobei die Schallgeschwindigkeit ein Maß für die Mürbigkeit ist und bevorzugt im Ultraschallbereich gemessen wird.

In einer weiteren Ausgestaltung weist die Messvorrichtung einen Schallgeber und einen Schallempfänge auf, wobei das Getreidekorn zwischen dem Schallgeber und der Schallempfänger mit einem vordefinierten Druck klemmbar ist.

In einer weiteren Ausgestaltung weist die Messvorrichtung eine Mess- und Auswerteeinheit auf, die mit dem Schallgeber und Schallempfänger elektrisch verbunden ist, wobei die Mess- und Auswerteinheit ausgebildet ist, die ermittelte Schallgeschwindigkeit mit Referenzwerten zu vergleichen, wobei die Referenzwerte an gekeimten Getreidekörnern vordefinierter Mürbigkeit vorab bestimmt werden.

In einer weiteren Ausprägung ist die Mess- und Auswerteinheit ausgebildet, die ermittelte Schallgeschwindigkeit anzuzeigen und/oder bei Erreichen der ermittelten Schallgeschwindigkeit eines vordefinierten Schwellwerts des Referenzwerts eine Meldung, zum Beispiel ein Signal, auszugeben.

In einer weiteren Ausgestaltung ist Messvorrichtung ausgebildet, die Dämpfung von Schallwellen in dem vorgekeimten Getreidekorn zu ermitteln, wobei die Dämpfung ein weiteres Maß für die Mürbigkeit ist.

Außerdem beansprucht die Erfindung eine Verwendung der erfindungsgemäßen Messvorrichtung bei der Herstellung von Malz für einen Brauprozess, wobei die Schallgeschwindigkeit in einem Keimbett an vordefinierten Stellen zu vordefinierten Zeiten automatisch ermittelt wird.

Weitere Besonderheiten und Vorteile der Erfindung werden aus den nachfolgenden Erläuterungen eines Ausführungsbeispiels anhand von schematischen Zeichnungen ersichtlich.

KURZE BESCHREIBUNG DER ZEICHNUNGEN

Es zeigen:

FIG. 1 eine Messvorrichtung zur Bestimmung der Schallgeschwindigkeit in einem Getreidekorn,

FIG. 2 eine Messvorrichtung zur Bestimmung der Schallgeschwindigkeit in einem Getreidekorn in reflektiver Geometrie, und

FIG. 3 eine Zangenanordnung zur einfacheren Zuführung eines Getreidekorns.

DETAILLIERTE BESCHREIBUNG DER ERFINDUNG

Ansatzpunkt für die Erfindung ist die Änderung der Mürbigkeit des Grünmalzes während des Keimvorganges. Ein wesentlicher Punkt bei der Malzherstellung besteht in der Freisetzung der Stärke im Endosperm des Korns. Die Stärke ist in Zellen gespeichert, deren Wände zum Großteil aus $\alpha$-Glucan aufgebaut ist. Während des Keimvorganges werden die Zellwände sukzessive durch Enzyme (Glucanasen) abgebaut. Wenn der Vorgang abgeschlossen ist, muss idealerweise der Keimungsvorgang beendet werden, weil sonst die $\alpha$-Glucanase damit beginnen die Stärke in Zucker umzuwandeln und das Wachstum des Keims beschleunigen. Dieser Zucker steht dann dem eigentlichen Brauprozess nicht zur Ver-

füguung, was zu einem suboptimalen Brauergebnis führt. Der Zeitpunkt des vollständigen Abbaus der Zellwände im Endosperm soll also detektiert werden. Das macht der Mälzer mit der Zerreibeprobe wie unter oben erläutert.

Der Abbau der Zellwände bewirkt eine Änderung der Elastizität der Gersten-/Malzkörner in Richtung Versprödung. Technisch ausgedrückt ändert sich das Elastizitätsmodul des Kornmaterials. Hier setzt die Erfindung an. Da de Elastizitätsmodul proportional zum Quadrat der Schallgeschwindigkeit ist, lässt sich über die Messung der Schallgeschwindigkeit bei bekannter Materialdichte der Elastizitätsmodul bestimmen. Der Zusammenhang zwischen der Schallgeschwindigkeit c und dem Elastizitätsmodul E ist gegeben durch:

$$c = \sqrt{\frac{E}{\rho}},$$

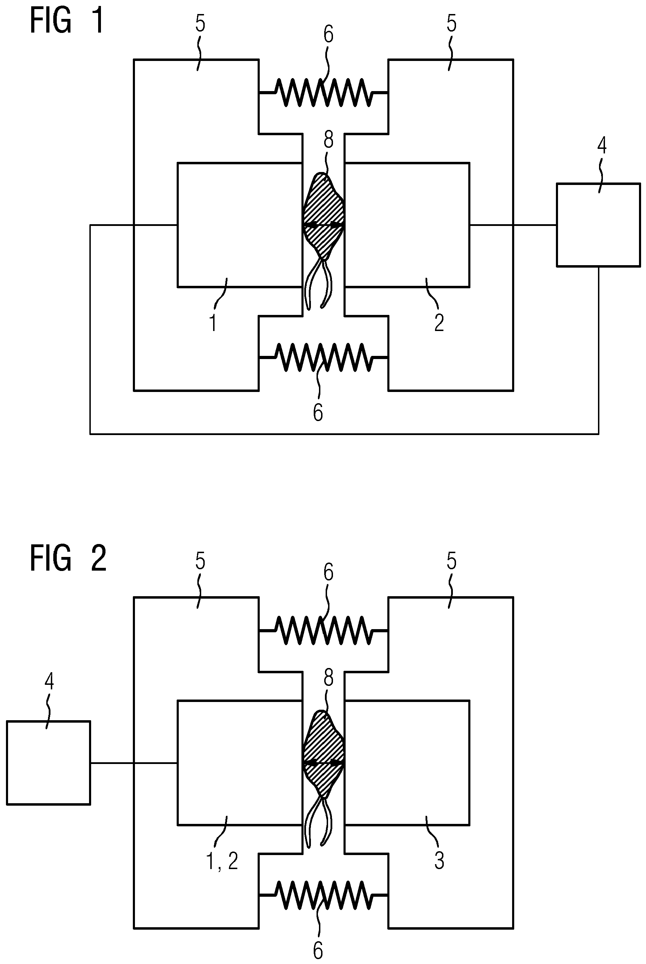

wobei p für die Materialdichte steht. Vorzugsweise wird diese Messung mit Ultraschall durchgeführt (günstig sind Longitudinalwellen, Transversalwellen können aber auch zum Einsatz kommen). Dabei wird die zu untersuchende Probe (= Getreidekorn 8) wie in FIG. 1 dargestellt zwischen einem Schallgeber 1 und einem Schallempfänger 2 in Kontakt positioniert. Um Luftspalte zu vermeiden, wird das Getreidekorn in der Halteeinheit 5 mit Hilfe der Federelemente 6 mit einem vordefinierten Druck geklemmt.

Zur Bestimmung von Referenzwerten für die Mürbigkeit und damit auch zur Bestimmung von Referenzwerten für die Schallgeschwindigkeit dient ein Friabilimeter. Mit dem Friabilimeter kann die Mürbigkeit und damit die Auflösung der Zellwände (siehe T. Dickel, Seite 40) von Gerstenmalzkörnern durch einen Abriebvorgang bestimmt werden. Die Ermittlung des Friabilimeterwerts dient neben anderen Indikatoren der standardisierten Analyse der chemischen Verhältnisse in bzw. der Eigenschaften oder Qualität von Gerstenmalz.

Die Schallgeschwindigkeit c wird dabei mit der direkten Messung der Zeit zwischen Aussendung des Schallsignals und dem Empfang des Schallsignals durch den Schallempfänger 2 bestimmt. Die Auswertung und Steuerung erfolgt in der Mess- und Auswerteeinheit 7, die mit dem Schallgeber 1 und dem Schallempfänger 2 in Verbindung steht. Dabei ist die Messung in Transmission mit einem getrenntem Schallgeber 1 und Empfänger 2 möglich (wie in FIG. 1 dargestellt) oder mit lediglich einem Transducer, bestehend aus Schallgeber 1 und Schallempfänger 2 mittels Reflektor 3 möglich, wie in FIG. 2 dargestellt. Letzteres führt zu einer Kostenreduktion der Hardware, aber bei kurzen Laufzeiten zu einer schlechten Trennung zwischen Sende- und Empfangssignal.

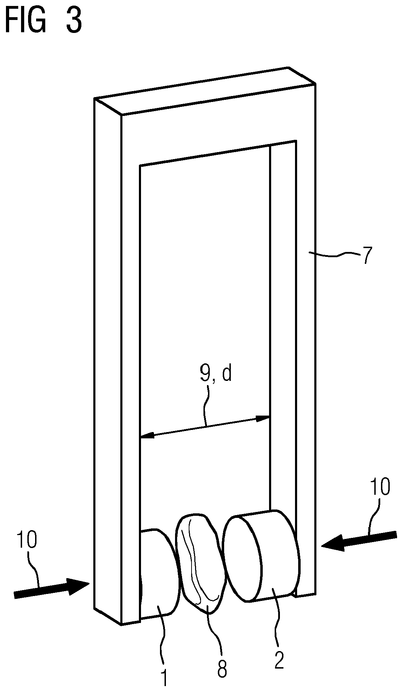

Um die Nutzung zu vereinfachen, können die Ultraschallwandler in einer Zangenkonfiguration, wie in FIG. 3 dargestellt, ausgeführt werden. An den beiden Backen einer Messzange 7 sitzen der Schallgeber 1 und der Schallempfänger 2. Zwischen dem Schallempfänger 2 und dem Schallgeber 1 wird ein Getreidekorn 8 durch eine Kraftaufbringung 10 gepresst. Mit Hilfe einer Abstandsmessung 9 kann die von den Schallwellen zu durchlaufende Wegstrecke bestimmt werden.

Bei der Messung der Schallgeschwindigkeit werden zwei Fälle unterschieden:

1. Das Schallsignal besteht aus einem kurzen Puls (Idealerweise kürzer als die Laufzeit zwischen Sender und Empfänger.) Aus der Messung der z.B. ersten Pulsflanke des gesendeten Signals und der ersten Pulsflanke des empfangenen Signals ergibt sich die Laufzeit des Signals im Medium und damit dessen Schallgeschwindigkeit c, bzw. bei bekannter Dichte $\rho$ das Elastizitätsmodul E. Bei der Laufzeit-Messung kann auch eine reflektive Geometrie gewählt werden, bei der der Schallgeber auch als Schallempfänger genutzt wird. Der Schallpuls durchläuft das Korn, wird an der gegenüberliegenden Seite reflektiert und trifft wieder auf den Schallgeber, der jetzt als Empfänger dient (FIG. 2). Die Auswertung des Signals erfolgt analog dem nichtreflektiven Fall.

2. Das Signal der Schallquelle besteht aus einer kontinuierlichen Abfolge von Druckschwankungen (z.B. Sinusschwingung). Dann lässt sich die Schallgeschwindigkeit aus der Phasenverschiebung zwischen Sende- und Empfangssignal bestimmen.

Beide betrachteten Varianten sind Grenzfälle einer allgemeinen Betrachtung. In der Praxis kommt man im zweiten Fall mit einer niedrigeren Schallfrequenz aus als im ersten Fall. Bei typischen Schallgeschwindigkeiten von einigen 1.000 m/s und Abmessungen der Malzkorns von d $\approx$ 4 mm liegen die Laufzeiten in der Größenordnung von 1 $\mu$s.

In einer weiteren Variante des Messprinzips kann man im der zu untersuchenden Probe (= vorgekeimtes Getreidekorn) eine stehende Schallwelle erzeugen, indem man die Resonanzbedingungen, gegeben durch die Schallgeschwindigkeit c und die Geometrie der Probe, erfüllt.

Die Resonanzfrequenz f ergibt sich im einfachsten Fall der longitudinalen Schwingung aus dem Abstand von Schallgeber und Empfänger bzw. der Dicke d des Korns mit der Gleichung:

$$f = \frac{nc}{2d}$$

mit n = 1, 2, ..., n.

Bei einer Variation der Schallfrequenz f lassen sich die Moden mit der Modennummer n (Resonanzfrequenzen) durchstimmen. Aus der Resonanzfrequenz f lässt sich die Schallgeschwindigkeit c und bei einer Kenntnis der Dichte ρ der Probe der Elastizitätsmodul E bestimmen. In diesem Fall wird die Messung einer Zeitspanne (Fall 1 und Fall 2) durch die Messung einer Frequenz f ersetzt.

Zusätzlich zur Laufzeit lässt sich auch noch die Dämpfung bestimmen - bei gepulstem Signal über die Abschwächung, bei resonanter Messung über die Linienbreite der Resonanz. Die Dämpfung hängt ebenso von den Eigenschaften des Mediums ab und kann als zusätzliche Kenngröße in die Bestimmung des Keimfortschritts einbezogen werden.

In allen Fällen wird idealerweise ein Getreidekorn 8 (oder mehrere) zwischen Schallgeber 1 und Empfänger 2 mit einem definiertem Anpressdruck gehalten, um eine gute Kopplung der Schallwellen zu erzielen. Bei definiertem Druck misst ein Messwertaufnehmer den Abstand d zwischen Schallgeber 1 und Empfänger 2, da diese Information für die Berechnung der Schallgeschwindigkeit c benötigt wird. Wenn der Anpressdruck ausreicht das Getreidekorn 8 zu zerdrücken, kann man von einer fortgeschrittenen Mürbigkeit des Getreidekorns 8 ausgehen und dieses Resultat an Stelle der nicht mehr messbaren Schallgeschwindigkeit c ausgeben.

In einer weiteren Ausführungsform kann ein fester Abstand zwischen Schallgeber 1 und Empfänger 2 definiert werden. Die Körner werden dann zur Messung mehr oder weniger deformiert. Das ist vertretbar, da im ersten Prozessschritt des Mälzens die Größenverteilung der Körner 8 eingeschränkt wird (Aussieben zu kleiner bzw. beschädigter Körner).

Neben der lokalen Messung der Schallgeschwindigkeit c umfasst die Erfindung auch eine gezielte Messwertaufnahme örtlich verteilt über das Keimbett, das mehrere Meter breit und mehrere zehn Meter lang sein kann. Der Messaufbau kann an einem Arm befestigt werden, mit dem jeder Punkt der Keimbettfläche für die Messung erreichbar wird. Damit kann nahezu kontinuierlich der Zustand des Keimgutes überwachen und Inhomogenitäten erfasst werden. Das eröffnet die Möglichkeit während des laufenden Mälzvorgangs in den Prozess einzugreifen und die Homogenität der Charge wiederherzustellen, bzw. Inhomogenitäten in der Anlage zu erkennen und diese durch bauliche Maßnahmen zu eliminieren.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

Bezugszeichenliste

1   Schallgeber
2   Schallempfänger
3   Reflektor
4   Mess- und Auswerteeinheit
5   Halteeinheit
6   Federelement
7   Messzange
8   Getreidekorn (= Probe)
9   Abstandsmessung
10   Kraftaufbringung

c   Schallgeschwindigkeit
d   Abstand
E   Elastizitätsmodul
f   Resonanzfrequenz
F   Kraftaufbringung
n   Modennummer
p   Dichte

**Patentansprüche**

1.   Automatisiertes Verfahren zur Bestimmung der Mürbigkeit von Getreidekörnern (8) bei der Keimung im Mälzprozess,
**dadurch gekennzeichnet,**
**dass** die Schallgeschwindigkeit (c) im gekeimten Getreidekorn (8) ermittelt wird, wobei die Schallgeschwindigkeit (c) ein Maß für die Mürbigkeit ist.

2.   Verfahren nach Anspruch 1,
**dadurch gekennzeichnet,**
**dass** die ermittelte Schallgeschwindigkeit (c) mit Referenzwerten verglichen werden, wobei diese an gekeimten Getreidekörnern (8) vordefinierter Mürbigkeit vorab bestimmt werden.

3.   Verfahren nach Anspruch 1 oder 2,
**dadurch gekennzeichnet,**
**dass** mindestens ein Getreidekorn (8) zur Ermittlung der Schallgeschwindigkeit (c) zwischen einem Schallgeber (1) und einem Schallempfänger (2) eine Messvorrichtung geklemmt wird.

4.   Verfahren nach Anspruch 3,
**dadurch gekennzeichnet,**
**dass** die Klemmung (10) unter einem vordefinierten Druck (F) und/oder vordefiniertem Abstand (d) erfolgt.

5.   Verfahren nach einem der vorhergehenden Ansprüche,
**dadurch gekennzeichnet,**
**dass** die Schallgeschwindigkeit (c) durch eine Laufzeitmessung oder eine Phasenverschiebung ermittelt wird.

6.   Verfahren nach einem der Ansprüche 1 bis 5,
**dadurch gekennzeichnet,**
**dass** die Schallgeschwindigkeit (c) durch Messung einer Resonanzfrequenz (f) ermittelt wird.

7. Verfahren nach einem der vorhergehenden Ansprüche,
   **dadurch gekennzeichnet,**
   **dass** die Dämpfung von Schallwellen in dem vorgekeimten Getreidekorn (8) ermittelt wird, wobei die Dämpfung ein weiteres Maß für die Mürbigkeit ist.

8. Verfahren nach einem der vorhergehenden Ansprüche,
   **dadurch gekennzeichnet,**
   **dass** die Schallwellen Ultraschall-Schallwellen sind.

9. Messvorrichtung zur Bestimmung der Mürbigkeit von Getreidekörnern (8) bei der Keimung im Mälzprozess,
   **dadurch gekennzeichnet,**
   **dass** Messvorrichtung ausgebildet ist, die Schallgeschwindigkeit (c) im gekeimten Getreidekorn (8) zu ermitteln, wobei die Schallgeschwindigkeit (c) ein Maß für die Mürbigkeit ist.

10. Messvorrichtung nach Anspruch 9,
    **gekennzeichnet durch**:

    - einen Schallgeber (1) und
    - einen Schallempfänger (2),

    wobei das Getreidekorn (8) zwischen dem Schallgeber (1) und der Schallempfänger (2) mit einem vordefinierten Druck klemmbar ist.

11. Messvorrichtung nach Anspruch 10,
    **gekennzeichnet durch**:

    - eine Mess- und Auswerteeinheit (4), die mit dem Schallgeber (1) und Schallempfänger (2) elektrisch verbunden ist,

    wobei die Mess- und Auswerteinheit (4) ausgebildet ist, die ermittelte Schallgeschwindigkeit (c) mit Referenzwerten zu vergleichen, wobei die Referenzwerte an gekeimten Getreidekörnern (8) vordefinierter Mürbigkeit vorab bestimmt werden.

12. Messvorrichtung nach Anspruch 11,
    wobei die Mess- und Auswerteinheit (4) ausgebildet ist, die ermittelte Schallgeschwindigkeit (c) anzuzeigen und/oder bei Erreichen der ermittelten Schallgeschwindigkeit (c) eines vordefinierten Schwellwerts des Referenzwerts ein Warnsignal auszugeben.

13. Messvorrichtung nach einem der Ansprüche 9 bis 12,
    **dadurch gekennzeichnet,**
    **dass** die Messvorrichtung ausgebildet ist, die Dämpfung von Schallwellen in dem vorgekeimten Getreidekorn (8) zu ermitteln, wobei die Dämpfung ein weiteres Maß für die Mürbigkeit ist.

14. Messvorrichtung nach einem der Ansprüche 9 bis 13,
    **dadurch gekennzeichnet,**
    **dass** die Schallwellen Ultraschall-Schallwellen sind.

15. Verwendung der Messvorrichtung nach einem der Ansprüche 9 bis 14 bei der Herstellung von Malz für einen Brauprozess,
    wobei die Schallgeschwindigkeit (c) in einem Keimbett an vordefinierten Stellen zu vordefinierten Zeiten automatisch ermittelt wird.

FIG 1

FIG 2

FIG 3

Europäisches Patentamt
European Patent Office
Office européen des brevets

# EUROPÄISCHER RECHERCHENBERICHT

**Nummer der Anmeldung**

EP 21 17 9602

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2020/216582 A1 (ENDRESS HAUSER SE CO KG [DE]) 29. Oktober 2020 (2020-10-29) | 9,13,14 | INV. C12C1/027 |
| A | * Seite 5, Zeile 26 - Seite 8, Zeile 14; Anspruch 1; Abbildungen 1,2 * | 1-8, 10-12 | C12C3/00 G01P5/24 |
| | ----- | | |
| X | AMER M.A. ET AL: "Ultrasonic velocity of water-ethanol-malic acid-lactic acid mixtures during the malolactic fermentation process", JOURNAL OF FOOD ENGINEERING, Bd. 149, 1. März 2015 (2015-03-01), Seiten 61-69, XP055860461, AMSTERDAM, NL ISSN: 0260-8774, DOI: 10.1016/j.jfoodeng.2014.09.042 Gefunden im Internet: URL:https://www.sciencedirect.com/science/article/pii/S0260877414004105/pdfft?md5=7809e192f64abd594e10957d4c39a65e&pid=1-s2.0-S0260877414004105-main.pdf> | 9,13,14 | |
| A | * Chapter 2.6; Seite 67, linke Spalte, Absatz 2 - Seite 68, rechte Spalte, letzter Absatz; Abbildung 8 * | 1-8, 10-12,15 | **RECHERCHIERTE SACHGEBIETE (IPC)** C12C G01P |
| | ----- | | |
| X,D | T. DICKEL: "Untersuchung zu enzymatischen Abbauprodukten beim Maischen im Hinblick auf die Entwicklung eines Prozessführungssystems", DISSERTATION AN DER TECHNISCHEN UNIVERSITÄT MÜNCHEN, 2003, XP002804744, | 9,13,14 | |
| A | * Seite 56, letzter Absatz * * Absatz [4.2.2.3] * * Seite 109 - Seite 110 * * Seite 127 * * Seite 130 * * Seite 27 * * Seite 40 * | 1-8, 10-12,15 | |
| | ----- | | |

Der vorliegende Recherchenbericht wurde für alle Patentansprüche erstellt

| Recherchenort | Abschlußdatum der Recherche | Prüfer |
|---|---|---|
| Den Haag | 11. November 2021 | Granet, Nicolas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................
& : Mitglied der gleichen Patentfamilie, übereinstimmendes Dokument

**ANHANG ZUM EUROPÄISCHEN RECHERCHENBERICHT
ÜBER DIE EUROPÄISCHE PATENTANMELDUNG NR.**

EP 21 17 9602

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-11-2021

| Im Recherchenbericht angeführtes Patentdokument | Datum der Veröffentlichung | Mitglied(er) der Patentfamilie | Datum der Veröffentlichung |
|---|---|---|---|
| WO 2020216582 A1 | 29-10-2020 | DE 102019110821 A1<br>WO 2020216582 A1 | 29-10-2020<br>29-10-2020 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **NARZIß.** *Die Bierbrauerei,* 2021, vol. 1, ISBN 978-3-527-32532-0

- **T. DICKEL.** Untersuchung zu enzymatischen Abbauprodukten beim Maischen im Hinblick auf die Entwicklung eines Prozessführungssystems. *Dissertation an der Technischen Universität München,* 2003